# FASCICULE DE BREVET EUROPEEN

(11) **EP 2 235 410 B1**
(45) Date de publication et mention de la délivrance du brevet: **21.11.2012**
(21) Numéro de dépôt: 09718796.7
(22) Date de dépôt: 07.01.2009
(51) Int. Cl.: F16K 11/078, F16K 31/60

(54) **ROBINET MITIGEUR DOUBLE**
DOPPELMISCHHAHN
DOUBLE MIXER TAP

(30) Priorité: 08.01.2008 FR 0850087
(43) Date de publication de la demande: 06.10.2010
(73) Titulaire: Capital Innovation (Sarl), 93406 St Ouen Cedex (FR)
(72) Inventeur: CORBIN, Jean-Yves, F-14480 Le Fresne Camilly (FR); D'ESTAIS, Mathias, F-14000 Caen (FR)
(74) Mandataire: Brochard, Pascale
(86) Numéro de dépôt international: PCT/FR2009/000007
(87) Numéro de publication internationale: WO 2009/112661

(56) Documents cités:
- WO-A-01/77556
- DE-A1- 19 923 988
- DE-U1-202007 013 926
- US-A- 4 960 154
- US-A- 5 896 601
- US-A1- 2006 162 793

## Description

La présente invention concerne un robinet mitigeur double comme, par exemple, un robinet mitigeur d'eau chaude et froide, pouvant être utilisé comme robinet mitigeur usuel à débit permanent et comme robinet mitigeur à fermeture automatique pour économiser l'eau.

### Etat de la technique

On connaît dans l'état de la technique des robinets mitigeurs qui possèdent un système de mélange complexe, soit à plaque mobile entre deux plaques fixes, domaine du brevet américain US4960154 d'inventeur Diagantis, soit à plaque mobile sur une plaque fixe, domaine de la présente invention. Ces robinets sont pilotés par un levier orientable angulairement dans un plan entre un minimum et un maximum pour régler le débit ou débiter un mélange de liquides et apte à pivoter, à orientation angulaire constante, autour d'un axe, généralement vertical, situé dans ce plan, pour faire varier la teneur en liquides du mélange débité.

Ainsi, dans le domaine des robinets mitigeurs, existent des robinets à levier, permettant un réglage précis et avec généralement peu d'effort de la part de l'utilisateur, du débit de liquide délivré par le robinet, au moyen de l'orientation angulaire du levier sur un domaine d'angles correspondant à la course du levier, entre une position angulaire de butée où le débit est nul et une position de fin de course où le débit est maximum. Ces robinets sont adaptés à délivrer du liquide sur une durée longue voire illimitée, en exigeant un premier geste de l'utilisateur pour initier le débit de liquide en levant le levier et un second geste pour arrêter le débit en ramenant le levier en butée.

Il existe aussi des robinets à poussoir permettant une économie de liquide en limitant la durée de la fourniture de liquide au temps d'enfoncement du poussoir ou au temps défini par un système de temporisation activé par le poussoir. En présence d'appui d'un utilisateur, du liquide est délivré. Lors de la disparition de cet appui, le robinet est ramené à un débit nul par un système de fermeture utilisant l'énergie stockée par l'utilisateur dans le poussoir lors de son appui ou une énergie extérieure permettant la fermeture d'une vanne dans le robinet. Typiquement, le poussoir peut comporter un système de rappel à ressort ou une électrovanne. Ces robinets n'exigent qu'un seul geste de l'utilisateur, généralement un appui vers le bas ou un enfoncement du poussoir, pour l'ouverture du robinet, la fermeture étant automatique au bout d'un temps fini. Ils exigent un effort important de l'utilisateur pour emmagasiner de l'énergie dans le poussoir lorsque le poussoir est mécanique.

### Problème des solutions de l'art antérieur

La configuration mécanique de ces robinets de l'art antérieur et les mouvements qui en résultent laissent peu de place à l'ajout de nouvelles fonctions compatibles avec le fonctionnement du mitigeur tant sur le plan technique que sur le plan ergonomique.

Ces deux types de robinets sont incompatibles et l'ajout d'un système de poussoir à un robinet à levier qui ramènerait ledit levier automatiquement en butée en l'absence d'appui de l'utilisateur serait d'usage limité, le débit de longue durée devenant impossible sur un tel robinet (un exemple en étant néanmoins le brevet N°DE19923988). Cette association serait toutefois désirable afin de permettre à un utilisateur qui souhaite économiser la quantité de liquide délivré par un robinet à levier pour des opérations qui le permettent comme s'humecter les mains avec de l'eau avant de se les savonner, d'avoir cette possibilité.

La juxtaposition sur un même robinet mitigeur d'un système de rappel en butée actif sur la course du levier du robinet et tendant à le ramener en butée ne permet donc pas de préserver la fonction du levier de débit de longue durée.

### Solution apportée par l'invention

Le but de la présente invention est de remédier à ces inconvénients des robinets mitigeurs de l'art antérieur, en proposant une solution combinant les avantages d'un système à levier et d'un système à poussoir.

Dans ce contexte, l'invention concerne selon son acception la plus générale un robinet mitigeur pour débiter un mélange de liquides, comprenant un système de mélange à plaque mobile munie d'un canal de mélange, évoluant en translation sur une plaque fixe munie d'orifices pour l'entrée de liquides et la sortie du mélange de ces liquides après passage dans le canal de mélange, qui comprend un levier orientable angulairement dans un plan entre un minimum et un maximum angulaires, pour faire varier le débit du mélange, le levier étant apte à pivoter, à orientation angulaire constante, autour d'une direction du plan, formant axe de rotation pour un cylindre mobile dans un corps de robinet fixe, le cylindre étant lié au levier dans ce mouvement, pour faire varier les teneurs en liquides du mélange, qui comprend des premiers moyens pour débiter le mélange, par orientation du levier en deçà d'une position de butée, d'une part et stopper le débit de mélange par orientation du levier dans un voisinage de la position de butée d'autre part, qui comprend des seconds moyens pour débiter le mélange par orientation du levier au-delà de la position de butée, et qui comprend une butée dynamique ressentie par un utilisateur appuyant sur le levier, au passage du levier par la position de butée.

Avantageusement, la butée dynamique comprend des moyens de rappel du levier au voisinage de la position de butée, en l'absence d'appui de l'utilisateur, pour des positions du levier au-delà de la position de butée, lesdits moyens de rappel étant inactifs lors du positionnement du levier en deçà de la position de butée, en s'éloignant de cette position de butée.

Selon une première variante, lesdits premiers moyens sont aptes à permettre, par orientation du levier en deçà de la position de butée, la rotation dans un sens d'une pièce intermédiaire, liant ledit levier à ladite plaque mobile, pour commander ladite translation de la plaque mobile sur ladite plaque fixe, la translation commandant ledit débit de mélange, et les seconds moyens sont aptes à permettre, par orientation du levier au-delà de la position de butée, l'orientation de la pièce intermédiaire dans le même dit sens.

Selon une seconde variante, les premiers moyens comprennent, dans ladite plaque mobile en translation sur ladite plaque fixe, un premier canal creux permettant le débit de mélange pour les orientations dudit levier en deçà de la position de butée, et une zone pleine pour stopper le débit de mélange à la position de butée, et les seconds moyens comprennent, dans ladite plaque mobile en translation sur ladite plaque fixe, un second canal creux, relié au premier canal, permettant le débit de mélange pour les orientations au delà de la position de butée.

Selon une troisième variante, les premiers moyens comprennent un premier circuit de liquides comprenant un premier tuyau d'arrivée de liquides et un second tuyau de départ de mélange des liquides, le débit de mélange entre les tuyaux étant piloté par l'orientation du levier en deçà de la position de butée et stoppé à cette position, les seconds moyens comprennent un second circuit de liquides comprenant un premier tube d'arrivée de liquides et un second tube de départ de mélange des liquides, le débit entre les tubes étant piloté par l'orientation du levier au-delà de la position de butée, commandant une électrovanne séparant le premier et le second tube, et le second tuyau et le second tube sont reliés entre eux.

Selon une quatrième variante, les premiers moyens comprennent dans la plaque mobile, une gorge pour recevoir un picot solidaire du levier, le levier étant mobile en rotation autour d'un axe, le déplacement du picot dans la gorge commandant la translation de la plaque dans un sens et le débit de mélange pour les orientations du levier en deçà de la position de butée, et stoppant ce débit à la position de butée, et les seconds moyens comprennent un prolongement de la gorge pour conserver le même dit sens de translation de la plaque mobile par orientation du levier au-delà de la position de butée.

Selon une cinquième variante, les premiers moyens comprennent un engrenage commun à la pièce intermédiaire et au levier, orientant la pièce intermédiaire en rotation dans un sens lorsque le levier est orienté en deçà de la position de butée et les seconds moyens sont constitués par un méplat commun à la pièce intermédiaire et au levier, orientant la pièce intermédiaire en rotation dans le même dit sens lorsque le levier est orienté au delà de la position de butée, le levier étant mobile autour d'un premier axe, la pièce intermédiaire étant mobile autour d'un second axe et le premier axe se déplaçant par des moyens de guidage sur une trajectoire circulaire centrée sur le second axe pour des orientations du levier au-delà de la position de butée.

Selon un mode de réalisation spécifique, les premiers moyens comprennent une gorge dans la pièce intermédiaire pour recevoir un picot solidaire du levier, le levier étant mobile en rotation autour d'un premier axe et la pièce intermédiaire autour d'un second axe, le déplacement du picot dans la gorge provoquant la rotation de la pièce intermédiaire dans un sens, lorsque le levier est orienté en deçà de la position de butée et les seconds moyens comprennent un prolongement de la gorge dans la pièce intermédiaire, le déplacement du picot provoquant la rotation de la pièce intermédiaire dans le même dit sens, lorsque le levier est orienté au delà de la position de butée

Selon un deuxième mode de réalisation spécifique, les premiers et les seconds moyens comprennent une biellette reliant le levier et la pièce intermédiaire, la biellette étant mobile en un axe primaire de rotation autour du levier et en un axe secondaire autour de la pièce intermédiaire, le levier étant mobile en rotation autour d'un premier axe et la pièce intermédiaire autour d'un second axe, les axes étant parallèles entre eux, la position de butée étant définie par l'orthogonalité du plan des axes primaire et secondaire et du plan des axes secondaire et second, la rotation de la pièce intermédiaire s'effectuant, par l'intermédiaire de la biellette, dans un même sens pour une orientation du levier en deçà et au-delà de la position de butée.

Selon un troisième mode de réalisation spécifique, les premiers moyens comprennent un premier axe pour la rotation de la pièce intermédiaire, comprennent une gorge circulaire, pratiquée dans le levier et centrée sur ce premier axe, comprennent un picot solidaire dudit cylindre, disposé dans la gorge, ledit picot étant en appui sur une première extrémité de la gorge à la position de butée du levier et au-delà, et le picot se déplaçant dans la gorge pour des positions du levier en deçà de cette position de butée, pour assurer une orientation du levier en rotation autour du premier axe en deçà de la position de butée et autour du picot au-delà, et comprennent un premier ergot de blocage, pratiqué dans le levier, immobilisant la pièce intermédiaire par rapport au levier pour ses positions en deçà de la position de butée, lorsque le levier est écarté de cette position de butée, pour provoquer la rotation de la pièce intermédiaire dans un sens, les seconds moyens comprennent un second ergot, pratiqué sur le levier, disposé entre le premier axe et le picot, la rotation du levier autour du picot dans le sens opposé pour des orientations du levier au delà de la position de butée, commandant la rotation de la pièce intermédiaire dans le même dit sens, par appui dudit second ergot sur cette pièce intermédiaire, et les moyens de rappels sont disposés entre la pièce intermédiaire et le levier.

Selon d'autres variantes particulières :
1) le second canal est entièrement dans la pièce mobile,
2) le second canal est entièrement dans la pièce fixe,
3) le second canal est pour partie dans la pièce mobile et pour partie dans la pièce fixe,
4) le premier et le second circuit de liquides comprennent un tuyau d'arrivée de liquides commun,
5) le premier et le second circuit de liquides comprennent chacun en propre un tuyau d'arrivée de liquides,
6) les moyens de rappel sont un ressort disposé entre ledit levier et ledit cylindre, lié à l'un seulement de ces deux éléments, et opérant en compression au-delà de la position de butée,
7) les moyens de rappel sont un ressort associé à un système de temporisation freinant le rappel du levier au voisinage de la position de butée,
8) la butée dynamique est active pour délivrer un signal à l'utilisateur dans un voisinage immédiat de la position de butée,
9) la butée dynamique comprend un premier moyen de rappel du levier, actif en deçà de la position de butée et un second moyen de rappel du levier actif au delà de la position de butée,
10) le signal est visuel ou sonore ou tactile,
11) le premier moyen de rappel est un premier ressort et le second moyen de rappel est un second ressort,
12) les premiers moyens permettent d'obtenir le débit de liquides entre des premières entrées de liquides et une première sortie de mélange et les seconds moyens permettent d'obtenir le débit de liquides entre des secondes entrées de liquides et une seconde sortie de mélange,
13) les premiers moyens permettent d'obtenir le débit de liquides entre des premières entrées de liquides et une première sortie de mélange et les seconds moyens permettent d'obtenir le débit de liquides entre lesdites premières entrées de liquides et une seconde sortie de mélange,
14) les premiers moyens permettent d'obtenir le débit de liquides entre des premières entrées de liquides et une première sortie de mélange et dans lequel les seconds moyens permettent d'obtenir le débit de liquides entre des secondes entrées de liquides et ladite première sortie de mélange,

L'invention concerne encore la réalisation d'un robinet mitigeur à levier muni d'un mode supplémentaire de débit de liquides, sans changement de l'amplitude de la course du levier.

### Description des figures.

L'invention sera mieux comprise à la lecture de la description qui suit, concernant des exemples de réalisation non limitatifs de l'invention et se référant aux dessins annexés où :
- la figure 1 représente en coupe un robinet selon un premier mode de l'invention muni d'une pièce intermédiaire, d'un engrenage et d'un méplat,
- les figures 2 à 6 représentent en coupe un robinet selon des modes de l'invention, du second au sixième, la figure 7 représente un robinet ne formant pas partie de l'invention telle que revendiquée,
- les figures 8, 9 et 10 représentent trois variantes du second mode pour l'agencement des pièces mobile et fixe de ce mode,
- la figure 11 représente un robinet avec butée intermédiaire de type cliquet à bille, ne formant pas partie de l'invention telle que revendiquée,
- la figure 12 représente l'invention avec butée intermédiaire de type ressort double,
- la figure 13 représente une version avec butée intermédiaire et deux canaux séparés pour deux modes de débit de liquide.

Pour faciliter la lisibilité des dessins, il n'a été représenté qu'un tuyau d'arrivée d'eau dans l'axe du corps du mitigeur lui-même. Il va de soi qu'il s'agit de mitigeurs, donc que l'arrivée d'eau est double, typiquement eau froide et eau chaude.

L'homme du métier comprendra donc à la lumière de la description qui suit qu'un circuit de liquide situé dans le plan d'une figure peut comporter en dehors de ce plan, une autre entrée pour un autre liquide à mélanger dans ce circuit et que la dimension hors de ce plan des éléments de ce circuit peut devoir être adaptée pour permettre l'introduction de cet autre liquide dans ledit circuit afin d'assurer la fonction mitigeur du robinet représenté.

De même, un homme du métier comprendra de la description que certains éléments, s'ils peuvent ne pas être rappelés en détail pour tous les modes de l'invention, sont communs aux robinets mitigeurs à levier et donc présents pour tous ces modes.

Il s'agit notamment, du système de mélange à plaque céramique mobile munie d'un canal de mélange, évoluant en translation sur une plaque céramique fixe munie d'orifices pour l'entrée de liquides et la sortie du mélange de ces liquides après passage dans le canal de mélange.

Il s'agit aussi d'un dispositif pour rendre la fonction de réglage du mélange indépendante du réglage du débit dans le robinet, autorisant la rotation autour d'un axe, usuellement vertical, du levier et de toutes les pièces mobiles permettant de régler le débit du mitigeur, jusqu'à la plaque mobile du système de mélange. Dans la description ci-dessous, ce dispositif prendra la forme d'un cylindre pouvant pivoter dans le corps du robinet autour d'un axe vertical, supportant les axes de rotation du levier et de toutes les pièces tournantes dans le robinet et entraînant en rotation la plaque mobile pour assurer un recouvrement variable des entrées de liquides de la plaque fixe par l'entrée du canal de cette plaque mobile et permettre de régler le mélange par rotation. Un robinet mitigeur à levier auquel l'invention est applicable, peut donc, de ce point de vue, être divisé en un premier sous-ensemble de pièces mobiles, solidaires du cylindre, et un second sous-ensemble, de pièces fixes, solidaires du corps du robinet.

### Description de l'invention :

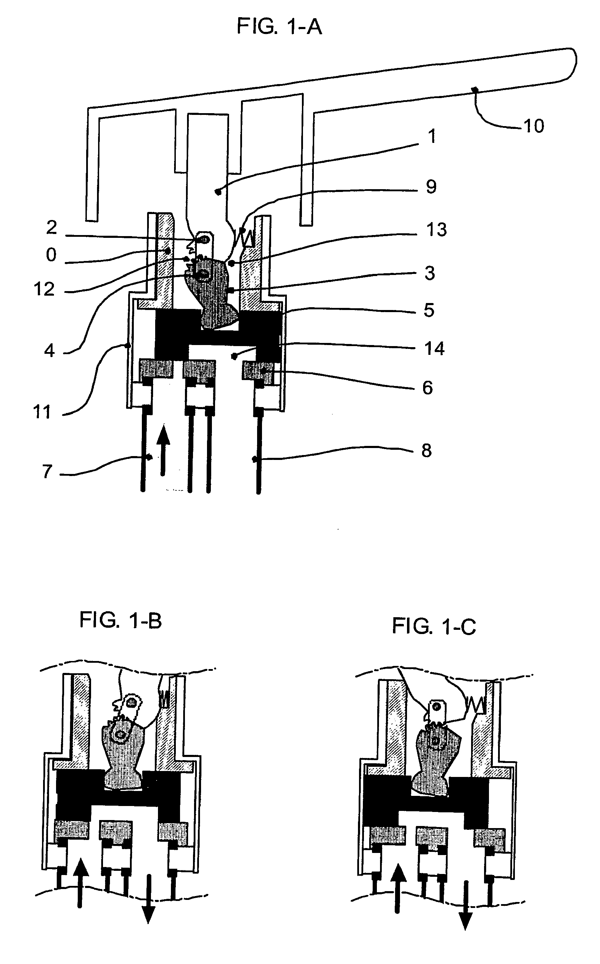

L'invention est décrite dans un premier mode de réalisation (figure 1) en tant que robinet comprenant dans un cylindre (0), un levier (1), comprenant un manche (10), mobile en rotation autour d'un premier axe (2), comprenant une pièce intermédiaire (3) mobile en rotation autour d'un second axe (4) dont l'une des extrémités est en contact avec le levier (1) l'autre extrémité étant insérée dans une plaque mobile (5) sur une plaque fixe (6) montée dans un corps de robinet (11), la plaque fixe comprenant au moins un tuyau d'arrivée d'eau (7) et un tuyau de départ d'eau (8), le robinet comprenant un ressort (9) solidaire du cylindre (0) ou solidaire du levier (1), la surface de contact entre le levier (1) et la pièce intermédiaire (3) étant munie d'un engrenage (12) et d'un méplat (13) et la plaque mobile (5) étant munie d'un creux (14) et d'une zone pleine.

Dans la position de la figure 1, le robinet est en position de butée et le débit est nul. Le ressort (9) s'oppose juste à l'orientation du levier (1) dans le sens indirect au-delà de la position de butée et cette opposition est effectivement ressentie par l'utilisateur comme une butée. Le ressort (9) n'est pas lié au levier (1) pour des orientations dans le sens direct en deçà de la position de butée, il est écrasé au-delà de la position de butée sur le cylindre (0) par le levier.

Lorsque le manche (10) est soulevé par un utilisateur, en deçà de la position de butée, l'extrémité du manche s'éloignant des tuyaux d'eau, le levier (1) subit une rotation autour du premier axe (2) dans le sens direct et l'engrenage (12) assure la rotation de la pièce intermédiaire (3) dans le sens indirect autour du second axe (4). Cette rotation entraîne en translation vers la gauche la plaque mobile (5) au-dessus de la plaque fixe (6) et le creux (14) dans la plaque mobile (5), recouvrant partiellement le tuyau d'arrivée d'eau (7) forme alors un canal pour le passage du liquide entre le tuyau d'arrivée d'eau (7) et le tuyau de départ (8) via le creux (14), commandant un débit de liquide.

Lorsque le manche (10) est abaissé par un utilisateur, au delà de la position de butée, l'extrémité du manche se rapprochant des tuyaux d'eau, le levier (1) se bloque en rotation autour du premier axe (2) dans le sens indirect grâce au méplat (13) et réalise la rotation de la pièce intermédiaire (3) dans le sens indirect autour du second axe (4). Cette rotation entraîne en translation vers la gauche la plaque mobile (5) au-dessus de la plaque fixe (6) et le creux (14) dans la plaque mobile (5), recouvrant partiellement le tuyau d'arrivée d'eau (7) forme alors un canal pour le passage du liquide entre le tuyau d'arrivée d'eau (7) et le tuyau de départ (8) via le creux (14). Le ressort (9) est solidarisé du levier (1) dans ce mouvement au-delà de la butée et l'utilisateur perçoit une résistance. Lorsque l'utilisateur relâche son appui sur le levier (1), le ressort (9) repousse le levier jusqu'à la position de butée. Dans les orientations du levier au-delà de la position de butée, le premier axe (2) décrit un mouvement circulaire autour du second axe (4) dans une gorge de guidage de forme en arc de cercle centré sur le second axe et permettant de maintenir le premier axe parallèle au second dans le mouvement du premier axe autour du second, la gorge de guidage bloquant la rotation du premier axe par rapport au second, en deçà de la position de butée. Une biellette peut aussi être utilisée comme alternative à la gorge de guidage, aux mêmes fins que la gorge.

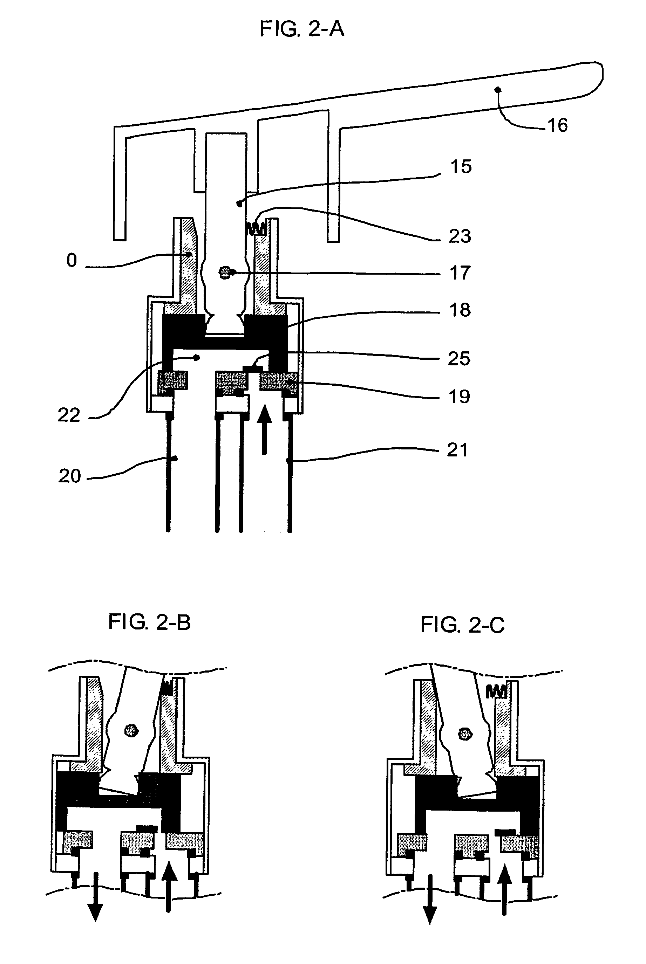

L'invention est décrite dans un second mode de réalisation (figure 2) en tant que robinet comprenant dans un cylindre (0), un levier (15), comprenant un manche (16), le levier étant orientable en rotation autour d'un axe (17) et ayant une extrémité engagée dans une plaque mobile (18) surmontant une plaque fixe (19) solidaire d'au moins un tuyau d'arrivée d'eau (21) et d'un tuyau de départ d'eau (20). La plaque mobile comprenant un canal creux (22) composé d'un premier et d'un second orifices reliés par un canal situé dans la pièce mobile (18) et séparés par une zone pleine (25). Un ressort (23) est utilisé aux mêmes fins que dans le premier mode de réalisation pour réaliser une butée.

Sur la figure, le canal creux (22) a l'un de ses orifices en face du tuyau de départ de liquide (20), sa zone pleine (25) obturant le tuyau d'arrivée de liquide (21), aucun débit de liquide n'est délivré par le robinet, le robinet est en position de butée. Pour une variation d'orientation dans le sens direct, en deçà de la butée, le premier orifice recouvre au moins partiellement les deux tuyaux et un débit de liquide est établi. Pour une variation d'orientation dans le sens indirect, au-delà de la butée, le second orifice recouvre partiellement le tuyau d'arrivée (21) et un débit de liquide est établi entre les tuyaux (20, 21) via le canal creux (22) joignant les deux orifices.

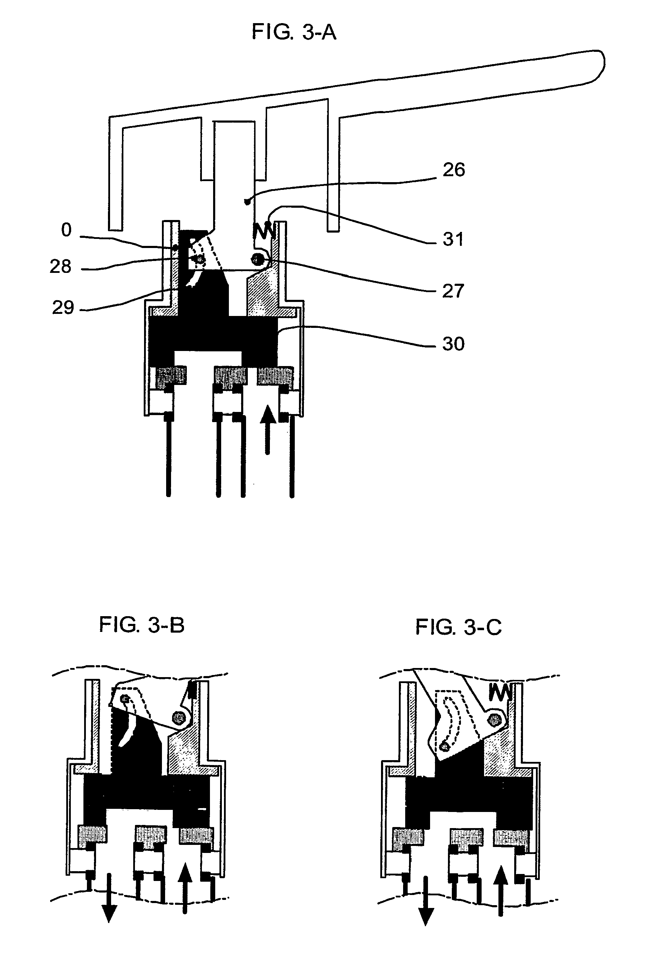

L'invention est décrite dans un troisième mode de réalisation (figure 3) en tant que robinet comprenant un levier (26), le levier étant orientable en rotation autour d'un axe (27) et ayant un picot (28) engagé dans une gorge (29) d'une plaque mobile (30) en translation pour commander un débit de liquide dans le robinet. Un ressort (31) est utilisé aux mêmes fins que dans le premier mode de réalisation pour réaliser une butée pour le levier (26).

Dans ce mode, la forme de la gorge (29) en arc de cercle présentant une face convexe à l'axe de rotation (27) permet lorsque le picot (28) est mis en rotation dans le sens direct ou indirect de provoquer la translation de la plaque mobile (30) dans le même sens et de provoquer un débit de liquide dans le robinet pour des orientations du levier en deçà ou au-delà de la position de butée où le ressort (31) est juste écrasé par le levier (26).

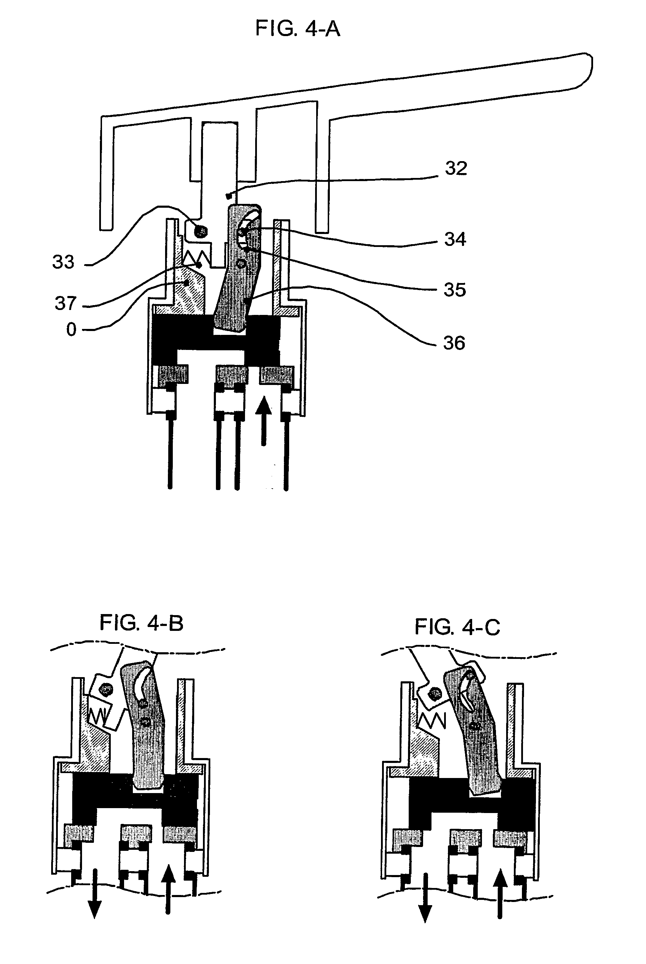

L'invention est décrite dans un quatrième mode de réalisation (figure 4) en tant que robinet comprenant dans un cylindre (0), un levier (32), le levier étant orientable en rotation autour d'un axe (33) et ayant un picot (34) engagé dans une gorge (35) d'une pièce intermédiaire (36) pour commander un débit de liquide dans les mêmes conditions que dans le premier mode de réalisation. Un ressort (37) est utilisé aux mêmes fins que dans le premier mode de réalisation pour réaliser une butée pour le levier (32).

Dans ce mode, la forme de la gorge (35) en arc de cercle présentant une face convexe à l'axe de rotation (33) permet lorsque le picot (34) est mis en rotation dans le sens direct ou indirect de provoquer la rotation de la pièce intermédiaire (36) dans le même sens, indirect sur la figure, et de provoquer un débit de liquide dans le robinet pour des orientations du levier en deçà ou au-delà de la position de butée où le ressort (37) est juste écrasé par le levier (32).

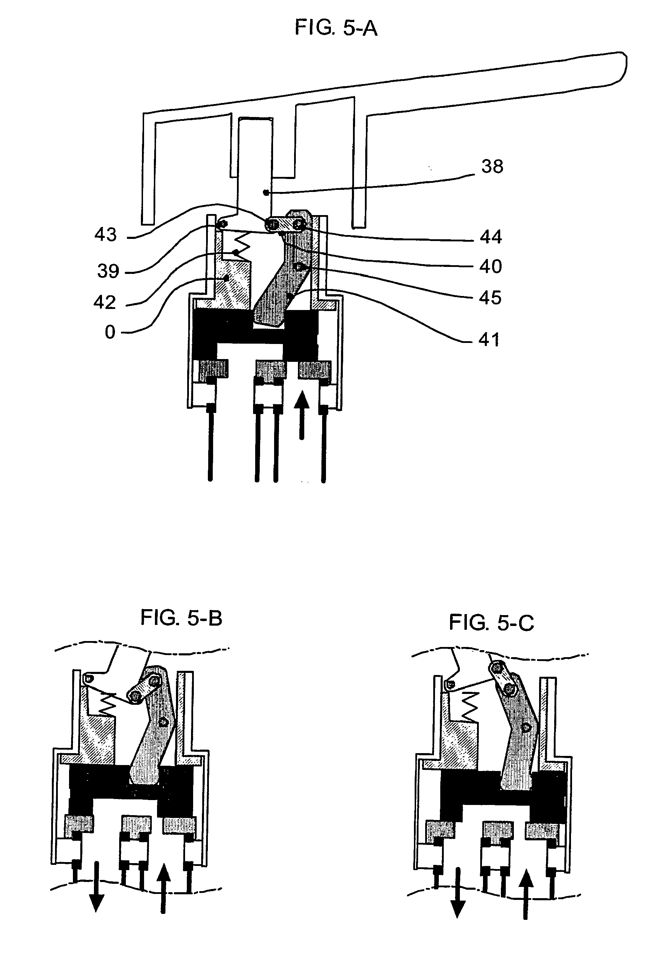

L'invention est décrite dans un cinquième mode de réalisation (figure 5) en tant que robinet comprenant dans un cylindre (0), un levier (38), le levier étant orientable en rotation autour d'un premier axe (39) et relié par une biellette (40) à une pièce intermédiaire (41) mobile en rotation autour d'un second axe (45) pour commander un débit de liquide dans les mêmes conditions que dans le premier mode de réalisation. Un ressort (42) est utilisé aux mêmes fins que dans le premier mode de réalisation pour réaliser une butée pour le levier (38).

Dans ce mode, la biellette (40), en tant que tige rigide reliée au levier par un premier axe de rotation (43) et à la pièce intermédiaire (41) par un second axe de rotation (44), permet pour des orientations du levier en deçà ou au-delà de la position de butée, dans laquelle le ressort (42) est juste écrasé par le levier (38), d'obtenir une translation dans le même sens, de la pièce intermédiaire, pour commander un débit de liquide dans le robinet.

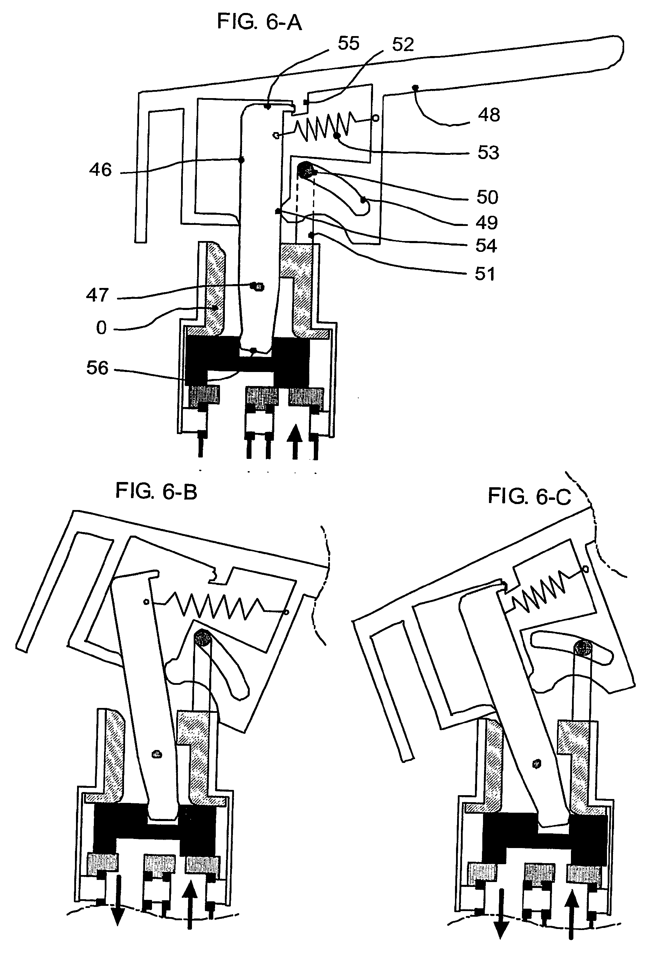

L'invention est décrite dans un sixième mode de réalisation (figure 6) en tant que robinet comprenant dans un cylindre (0), un levier (46), le levier étant orientable en rotation autour d'un premier axe (47) et un manche (48) muni d'une gorge (49) pour le guidage d'un second axe de rotation (50) solidaire du cylindre (0), le manche étant muni d'un arrêt intérieur (52) pour une première extrémité du levier (55), la seconde extrémité du levier (56) étant insérée dans une plaque mobile pour commander le débit de liquide dans des conditions similaires au premier mode de réalisation et le manche comprenant en outre un point de contact permanent (54) avec le levier, situé entre le second axe de rotation (50) et le premier axe de rotation (47). Un ressort (53) solidaire du manche (48) et du levier (46) est utilisé pour ramener le levier (46) en position de butée, en appui sur l'arrêt (52).

Le robinet étant en position fermée et en butée, le débit de liquide étant nul dans le robinet, la première extrémité du levier (55) est en appui sur l'arrêt (52) grâce au ressort (53) et le second axe (50) est en appui sur une des extrémités de la gorge (49) ou début de la gorge.

Dans cette position de butée, une variation de l'orientation du manche dans le sens direct, en deçà de la position de butée impose à la première extrémité du levier (55), en appui sur l'arrêt (52) une variation d'orientation dans le même sens direct, le second axe de rotation (50) progressant dans la gorge (49) jusqu'à sa fin, un débit de liquide est alors délivré par le robinet. Lorsque le manche revient vers la position de butée, le ressort (53) maintient le levier sur l'arrêt et le ramène avec le manche, le second axe régressant dans la gorge jusqu'à revenir en appui sur le début de la gorge.

Une variation de l'orientation du manche dans le sens indirect, au delà de la position de butée, impose alors au levier une poussée au point de contact permanent (54) du manche en rotation autour du second axe (50) en appui sur le début de la gorge (49). Cette poussée impose une extension du ressort (53), un décollement de la première extrémité du levier (55) de l'arrêt (52) et une variation d'orientation dans le sens direct du levier (46) autour du premier axe (47), établissant un débit de liquide dans le robinet. Lorsque l'appui cesse sur le manche, au-delà de la position de butée, le ressort (53) tend à ramener l'ensemble du robinet à sa position de butée.

Dans un mode de réalisation ne formant pas partie de l'invention, le robinet comprend dans un cylindre (0), un levier (57) muni d'un manche (58), le levier commandant un débit de liquide entre un premier circuit d'eau établi entre au moins un tuyau d'arrivée (59) et un deuxième tuyau de départ de liquide (60), le levier fermant un interrupteur (61) jouant le rôle de butée pour des variations de l'orientation du levier dans le sens indirect. Un second circuit d'eau ou d'un autre liquide est établi entre un troisième tuyau ou tube d'arrivée de liquide (62) séparé du tuyau de départ de liquide par une électrovanne (63), lorsque l'électrovanne est commandée par la fermeture de l'interrupteur (61) suite à l'appui sur le levier pour tendre à lui faire prendre des orientations au-delà de la position de butée.

Dans des variantes de réalisation du second mode de l'invention, la pièce mobile (18) et la pièce fixe (19) peuvent être utilisées alternativement ou conjointement pour réaliser le canal creux (22).

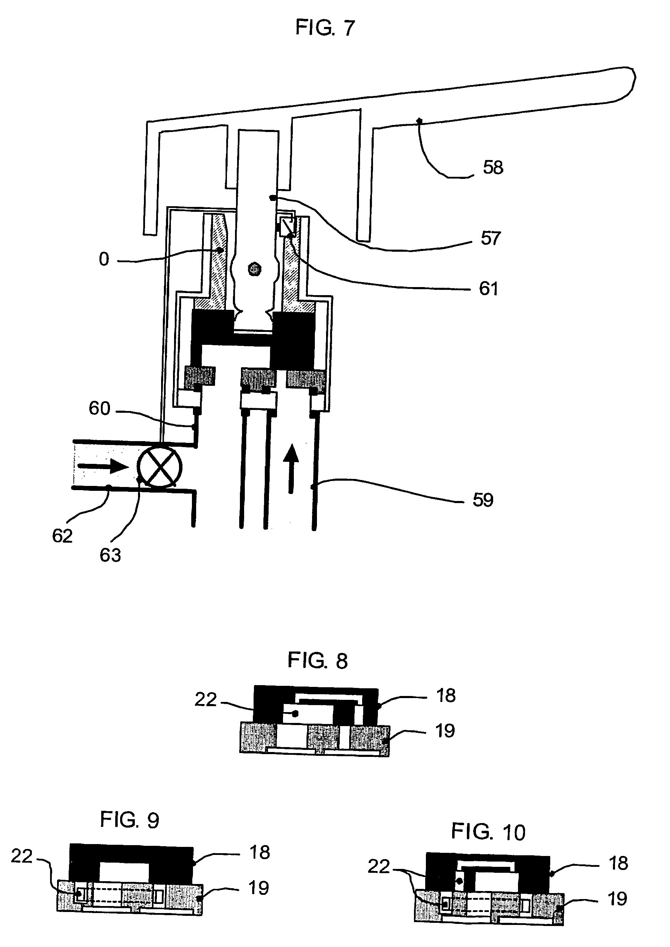

Dans la première variante (figure 8), déjà exposée (figure 2) le canal est situé entièrement dans la pièce mobile (18).

Dans une seconde variante (figure 9) le canal est situé entièrement dans la pièce fixe (19).

Dans une troisième variante (figure 10) le canal est situé pour partie dans la pièce mobile (18) et pour partie dans la pièce fixe (19).

Concernant le sixième mode de réalisation de l'invention, il est possible d'observer que le ressort (53), lié au manche et au levier, qui rappelle le levier vers la position de butée au-delà de cette position de butée, en travaillant en traction, est inactif dans sa fonction de ramener le levier en position de butée, même s'il peut être soumis à une légère tension pour plaquer le levier sur l'ergot (52), lors d'un positionnement du levier en deçà de la position de butée, c'est-à-dire lors du déplacement du levier pour atteindre une position du levier située en deçà de la position de butée, en s'éloignant de la position de butée, ceci correspondant a priori à un débit permanent de liquide durant indéfiniment. Ledit ressort est cependant actif, en traction, lors du repositionnement du levier vers la position de butée à partir d'une position située en deçà de cette position de butée. La disposition du ressort de l'autre côté du levier permettrait de ne lier ce ressort qu'au manche, pour un fonctionnement équivalent, le ressort étant inactif en compression, même s'il peut être soumis à une légère compression pour plaquer le levier sur l'ergot (52) seulement lors du positionnement du levier vers une position en deçà de la position de butée, en s'éloignant de cette position de butée.

Dans tous les modes de réalisation, on peut trouver d'autres localisations du ressort puisque tous les mouvements mécaniques sont liés entre eux. Ainsi, on pourrait imaginer introduire une lame ressort entre le disque mobile et le corps du mitigeur.

On peut aussi utiliser un ressort freiné, par exemple un piston à gaz dont la fuite calibrée permet de contrôler la vitesse de retour du ressort incorporé dans le piston.

Concernant le concept inventif général de l'invention, il est possible d'observer que la combinaison d'un robinet à poussoir et d'un robinet à levier n'est pas le seul enseignement de l'invention. Le robinet à poussoir est utilisé en tant que robinet permettant l'économie de liquide ou encore comme second mode de débit de liquide dans un robinet à levier ne comprenant, sans l'invention, qu'un premier mode de débit de liquide. L'invention concerne donc aussi un procédé permettant d'intégrer dans un robinet à levier, un moyen apte à être utilisé pour économiser le liquide, ou à mettre à la disposition de l'utilisateur un deuxième mode de fonctionnement du robinet accessible sans changement de l'amplitude de la course du levier.

De ce point de vue, l'invention est aussi un procédé permettant d'intégrer deux modes de fonctionnement en débit de liquide, dans un robinet à levier sans changer la course angulaire du levier de ce robinet.

Ce procédé est caractérisé en ce qu'il consiste à :
- séparer la course du levier d'un robinet mitigeur, variable en position angulaire entre un minimum et un maximum, en deux plages angulaires, par une butée intermédiaire, active pour délivrer un signal à un utilisateur du levier, au passage de ce levier par une position angulaire de butée, intermédiaire entre le minimum et le maximum,
- modifier des moyens associant la position angulaire du levier au débit de liquide dans le robinet, pour obtenir un débit nul stable de mélange de liquides débité par le robinet, à la position intermédiaire, pour obtenir un premier mode de débit de liquide entre la position intermédiaire et le maximum angulaire du levier, et pour obtenir un second mode de débit de liquide entre la position intermédiaire et le minimum angulaire du levier.

On pourra ainsi considérer qu'un robinet mitigeur à levier possédant une butée dynamique, apte à produire au passage par une position intermédiaire, de butée, du levier, un signal perceptible par l'utilisateur et dont les moyens de débit de mélange de liquides sont dédoublés en deux modes de débit de liquide pour des positions du levier de part et d'autre de la position intermédiaire est conforme à l'enseignement de l'invention.

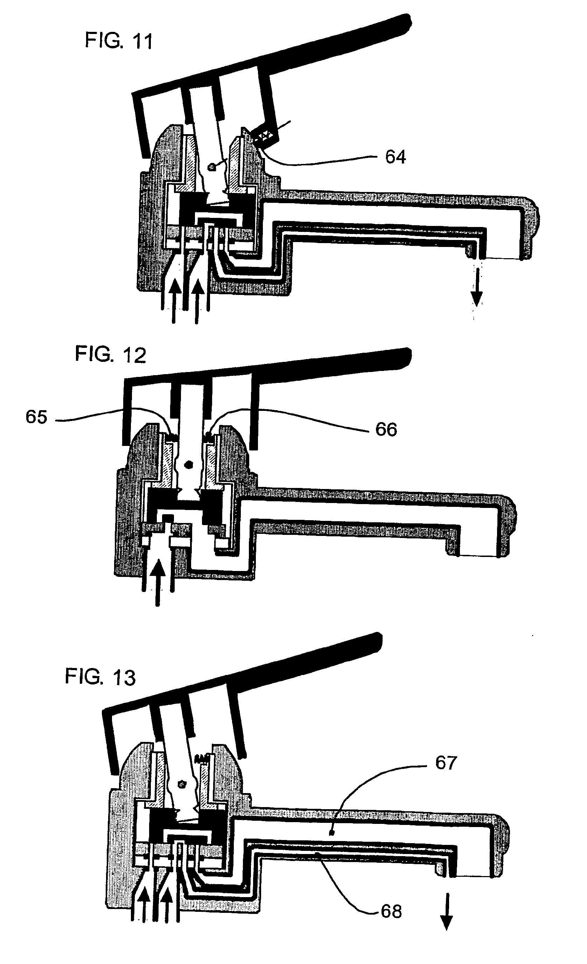

On pourra ainsi envisager un signal visuel comme celui d'une diode lumineuse ou un bip sonore ou enfin (figure 11) un cliquet mécanique (64) causé par l'entrée d'une bille contenue dans un creux ménagé dans le manche du levier du robinet et poussée par un ressort, l'entrée s'effectuant dans un creux ménagé dans le corps du robinet. L'utilisateur peut dans ce dernier cas être informé tactilement, par une secousse de l'arrivée à la butée intermédiaire, une transition dans l'effort à fournir pour bouger le levier étant ressentie à l'arrivée à la position intermédiaire, dans son voisinage immédiat, lorsque la bille sort du manche.

Il est aussi possible de réaliser l'enseignement de l'invention (figure 12) en écrasant un ressort entre le levier et le cylindre (0) d'un robinet à levier, le ressort étant attaché à un seul de ces éléments, ou encore de façon équivalente, en disposant deux ressorts distincts (65) (66), l'un étant écrasé lors d'un positionnement du levier vers les valeurs angulaires au-delà de la position intermédiaire et l'autre étant écrasé pour un positionnement vers les valeurs en deçà. Dans le cas de deux ressorts, les deux ressorts peuvent être attachés chacun au levier et au cylindre (0) ou seulement à un seul de ces éléments. Un effort nul ou faible est alors ressenti par l'utilisateur au passage du levier par la position intermédiaire. Les ressorts servant de moyen de rappel à cette position pour des positions non intermédiaires du levier. Il n'existe pas dans ces cas de butée réelle, statique, localisée à la position de butée mais seulement une butée dynamique, qui est ressentie par la main de l'utilisateur du fait de l'absence du phénomène de rappel propre ou intrinsèque du levier, c'est-à-dire ressentie « en creux », au passage par la position de butée.

De même, la modification des moyens associant la position angulaire du levier au débit de liquides pourra être effectuée afin de permettre un premier débit de liquides dans un premier canal d'une plaque de mélange de mitigeur, mobile sur une plaque fixe au-delà de la position intermédiaire ou de butée et un second débit de liquides dans un deuxième canal en deçà de cette position.

La réalisation (figure 13) de deux canaux (67) (68) ne communiquant pas dans une plaque de mitigeur au lieu de canaux communiquant, pourra être effectuée à cet effet. La réalisation d'un robinet unique pour délivrer deux mélanges de liquides différents est donc possible avec l'invention.

Il sera aussi possible avec une plaque mobile dans un robinet mitigeur, munie de deux canaux communiquant comme décrit précédemment, de choisir soit de délivrer du liquide selon deux modes partageant une entrée ou une sortie, de façon à distribuer du liquide par exemple entre une douche et un robinet de baignoire si la sortie est distincte et l'entrée commune ou un mélange de deux produits comme de l'eau du réseau et de l'eau filtrée si la sortie est commune et les entrées distinctes. Deux canaux complètement séparés ou partageant soit la sortie de mélange soit les entrées de liquides peuvent être ainsi utilisés conformément à l'invention pour concevoir des mitigeurs doubles.

La butée dynamique selon l'invention peut aussi être envisagée sous plusieurs formes ci-dessous.

Une butée dynamique, activée uniquement lorsque le levier a quitté la position intermédiaire et apte à provoquer un arrêt franc lorsque le levier la rencontre en position intermédiaire, lequel arrêt franc s'éclipse ensuite pour laisser libre un éventuel nouveau déplacement du levier. Une telle butée peut être réalisée par une pièce similaire à un échappement à ancre utilisée dans l'horlogerie.

Une butée dynamique peut aussi être réalisée par un aimant passant à proximité d'un matériau ferreux lorsque l'on s'approche de la position intermédiaire. Cet aimant peut par exemple être fixé sur une partie du manche, proéminente vers l'intérieur, qui passe au contact du corps du robinet réalisé pour sa part en matériau ferreux, lorsque l'on se rapproche de la position intermédiaire.

Une butée dynamique est plus généralement un changement de perception de l'utilisateur qui manipule le manche du mitigeur dans un plan VERTICAL entre un minimum et un maximum angulaires et passe à proximité de la valeur angulaire pour laquelle le débit de liquide est interrompu. Ainsi, un changement dans le retour de force du levier sur la main de l'utilisateur dû à la présence d'un ressort dont la compression débute à partir des valeurs d'orientation en deçà et/ou au-delà de la valeur angulaire pour laquelle le débit de liquide est interrompu est une butée dynamique au sens du brevet. De même, on peut selon le brevet, réaliser une conception qui minimise les frottements lors du déplacement en deçà de la butée et qui génère un frottement non négligeable pour les déplacements au-delà de la butée.

Ces systèmes peuvent être utilisés isolément ou conjointement. Ainsi, une butée dynamique telle que décrite dans la figure 11 de type cliquet mécanique à bille peut être avantageusement combinée à un effet de butée dynamique réalisé par un aimant et un retour automatique de type ressort sur l'un ou/et l'autre des déplacement angulaires du manche du mitigeur dans un plan vertical.

Du point de vue de l'utilisateur, le robinet mitigeur selon l'invention permet de régler le débit d'un mélange de liquides, par un levier orientable à angle constant autour d'une direction verticale pour faire varier les teneurs en liquides du mélange et apte à pivoter dans un plan vertical dans une plage angulaire comprise entre un minimum et un maximum, pour faire varier le débit du mélange, et présente une position d'arrêt du débit au sein de ladite plage angulaire avec un débit non nul tant au-delà qu'en deçà de cette position.

L'invention est susceptible d'application industrielle dans le domaine de la fabrication de robinets mitigeurs, afin de munir ces robinets mitigeurs d'un mode supplémentaire de débit de mélange de liquides sans modification de l'amplitude de la course de leur levier.

## Revendications

1. Robinet mitigeur pour débiter un mélange de liquides, comprenant un système de mélange à plaque mobile (5) (18) munie d'un canal de mélange (14) (22), évoluant en translation sur une plaque fixe (6) (19) munie d'orifices pour l'entrée de liquides (7) et la sortie du mélange (8) de ces liquides après passage dans le canal de mélange, le robinet comprenant un levier (1) (26) (32) (38) (48) (57) orientable angulairement dans un plan entre un minimum et un maximum angulaires, pour faire varier le débit du mélange, le levier étant apte à pivoter, à orientation angulaire constante, autour d'une direction du plan, formant axe de rotation pour un cylindre (0) mobile dans un corps de robinet fixe (11), le cylindre étant lié au levier dans ce mouvement, pour faire varier les teneurs en liquides du mélange, le robinet comprenant des premiers moyens pour débiter le mélange, par orientation du levier en deçà d'une position de butée, d'une part et stopper le débit de mélange par orientation du levier dans un voisinage de la position de butée d'autre part, le robinet comprenant des seconds moyens pour débiter le mélange par orientation du levier au-delà de la position de butée, et le robinet comprenant une butée dynamique (64) (61) ressentie par un utilisateur appuyant sur le levier, au passage du levier par la position de butée, caractérisé en ce la butée dynamique comprend des moyens de rappel (9) (23) (31) (37) (42) (53) (65) (66) du levier au voisinage de la position de butée, en l'absence d'appui de l'utilisateur, pour des positions du levier au-delà de la position de butée, lesdits moyens de rappel étant inactifs lors du positionnement du levier en deçà de la position de butée, en s'éloignant de cette position de butée.

2. Robinet selon la revendication 1, dans lequel les premiers moyens sont aptes à permettre, par orientation du levier en deçà de la position de butée, la rotation dans un sens d'une pièce intermédiaire (3) (36) (41), liant ledit levier à ladite plaque mobile, pour commander ladite translation de la plaque mobile sur ladite plaque fixe, la translation commandant ledit débit de mélange, et dans lequel les seconds moyens sont aptes à permettre, par orientation du levier au-delà de la position de butée, l'orientation de la pièce intermédiaire dans le même dit sens.

3. Robinet selon la revendication 1, dans lequel, les premiers moyens comprennent, dans ladite plaque mobile en translation sur ladite plaque fixe, un premier canal (22) creux, permettant le débit de mélange pour les orientations dudit levier en deçà de la position de butée, et une zone pleine (25) pour stopper le débit de mélange à la position de butée et dans lequel les seconds moyens comprennent, dans la plaque mobile en translation sur la plaque fixe, un second canal creux, relié au premier canal, permettant le débit de mélange pour les orientations au-delà de la position de butée.

4. Robinet selon la revendication 1, dans lequel les premiers moyens comprennent, dans ladite plaque mobile, une gorge (29) pour recevoir un picot (28) solidaire du levier, le levier (26) étant mobile en rotation autour d'un axe (27), le déplacement du picot dans la gorge commandant la translation de la plaque dans un sens et le débit de mélange pour les orientations du levier en deçà de la position de butée, et stoppant ce débit à la position de butée, et dans lequel les seconds moyens comprennent un prolongement de la gorge pour conserver le même dit sens de translation de la plaque mobile par orientation du levier au-delà de la position de butée.

5. Robinet selon la revendication 2, dans lequel les premiers moyens comprennent un engrenage (12) commun à la pièce intermédiaire (3) et au levier (1), orientant la pièce intermédiaire en rotation dans un sens lorsque le levier est orienté en deçà de la position de butée et dans lequel les seconds moyens sont constitués par un méplat (13) commun à la pièce intermédiaire et au levier, orientant la pièce intermédiaire en rotation dans le même dit sens lorsque le levier est orienté au-delà de la position de butée, le levier étant mobile autour d'un premier axe (2), la pièce intermédiaire étant mobile autour d'un second axe (4) et le premier axe se déplaçant par des moyens de guidage sur une trajectoire circulaire centrée sur le second axe pour des orientations du levier au-delà de la position de butée.

6. Robinet selon la revendication 2, dans lequel les premiers moyens comprennent une gorge (35) dans la pièce intermédiaire (36) pour recevoir un picot solidaire (34) du levier (32), le levier étant mobile en rotation autour d'un premier axe (33) et la pièce intermédiaire autour d'un second axe, le déplacement du picot dans la gorge provoquant la rotation de la pièce intermédiaire dans un sens, lorsque le levier est orienté en deçà de la position de butée et dans lequel les seconds moyens comprennent un prolongement de la gorge dans la pièce intermédiaire, le déplacement du picot provoquant la rotation de la pièce intermédiaire dans le même dit sens, lorsque le levier est orienté au-delà de la position de butée.

7. Robinet selon la revendication 2, dans lequel les premiers et les seconds moyens comprennent une biellette (40) reliant le levier (38) et la pièce intermédiaire (41), la biellette étant mobile en un axe primaire (43) de rotation autour du levier et en un axe secondaire (44) autour de la pièce intermédiaire, le levier étant mobile en rotation autour d'un premier axe (39) et la pièce intermédiaire autour d'un second axe (45), les axes étant parallèles entre eux, la position de butée étant définie par l'orthogonalité du plan des axes primaire et secondaire et du plan des axes secondaire et second, la rotation de la pièce intermédiaire s'effectuant, par l'intermédiaire de la biellette, dans un même sens pour une orientation du levier en deçà et au-delà de la position de butée.

8. Robinet selon les revendications 1 et 2, dans lequel les premiers moyens comprennent un premier axe (47) pour la rotation de la pièce intermédiaire (46), comprennent une gorge circulaire (49), pratiquée dans le levier (48) et centrée sur ce premier axe, comprennent un picot (50) solidaire dudit cylindre, disposé dans la gorge, ledit picot étant en appui sur une première extrémité de la gorge à la position de butée du levier et au-delà, et le picot se déplaçant dans la gorge pour des positions du levier en deçà de cette position de butée, pour assurer une orientation du levier en rotation autour du premier axe en deçà de la position de butée et autour du picot au-delà, et comprennent un premier ergot (52) de blocage, pratiqué dans le levier, immobilisant la pièce intermédiaire par rapport au levier pour ses positions en deçà de la position de butée, lorsque le levier est écarté de cette position de butée, pour provoquer la rotation de la pièce intermédiaire dans un sens, dans lequel les seconds moyens comprennent un second ergot (54), pratiqué sur le levier, disposé entre le premier axe et le picot, la rotation du levier autour du picot dans le sens opposé pour des orientations du levier au-delà de la position de butée, commandant la rotation de la pièce intermédiaire dans le même dit sens, par appui dudit second ergot sur cette pièce intermédiaire, et dans lequel les moyens de rappels (53) sont disposés entre la pièce intermédiaire et le levier.

## Claims

1. Mixer tap to discharge a mixture of liquids, comprising a moving plate mixing system (5) (18) provided with a mixing channel (14) (22), moving in translation on a fixed plate (6) (19) provided with orifices for the inlet of liquids (7) and the outlet of the mixture (8) of said liquids after passing through the mixing channel, the tap comprising a lever (1) (26) (32) (38) (48) (57) angularly orientable in a plane between an angular minimum and a maximum, to vary the flow of the mixture, the lever being capable of pivoting, at constant angular orientation, around one direction of the plane, forming an axis of rotation for a moving cylinder (0) in a fixed tap body (11), the cylinder being linked to the lever in this movement, to vary the liquid content of the mixture, the tap comprising first means of discharging the mixture, by orienting the lever on one side of a stop position, on the one hand, and stopping the flow of mixture by orienting the lever in a vicinity of the stop position on the other hand, the tap comprising second means of discharging the mixture by orienting the lever on the other side of the stop position, and the tap comprising a dynamic stop (64) (61) felt by a user pressing on the lever, when the lever passes through the stop position, **characterised in that** the dynamic stop comprises means of returning (9) (23) (31) (37) (42) (53) (65) (66) the lever to the vicinity of the stop position, when not pressed by the user, for positions of the lever on the other side of the stop position, said return means being inactive during the positioning of the lever on one side of the stop position, while moving away from this stop position.

2. Tap according to claim 1, wherein the first means are capable of enabling, by orienting the lever on one side of the stop position, the rotation in a direction of an intermediate part (3) (36) (41), linking said lever to said moving plate, to control said translation of the moving plate on said fixed plate, the translation controlling said flow of mixture, and in which the second means are suited to enabling, by orienting the lever on the other side of the stop position, the orientation of the intermediate part in the same said direction.

3. Tap according to claim 1, wherein the first means comprise, in said plate moving in translation on said fixed plate, a first hollow channel (22), enabling the flow of mixture for the orientations of said lever on one side of the stop position, and a solid zone (25) to stop the flow of mixture at the stop position and wherein the second means comprise, in the plate moving in translation on the fixed plate, a second hollow channel connected to the first channel, enabling the flow of mixture for orientations on the other side of the stop position.

4. Tap according to claim 1, wherein the first means comprise, in said moving plate, a groove (29) to receive a pin (28) integral with the lever, the lever (26) being movable in rotation around an axis (27), the displacement of the pin in the groove controlling the translation of the plate in a direction and the flow of mixture for orientations of the lever on one side of the stop position, and stopping this flow at the stop position, and wherein the second means comprise an extension of the groove to conserve the same said direction of translation of the moving plate by orientation of the lever on the other side of the stop position.

5. Tap according to claim 2, wherein the first means comprise a gear assembly (12) common to the intermediate part (3) and the lever (1), orienting the intermediate part in rotation in one direction when the lever is oriented on one side of the stop position and wherein the second means are constituted by a flat spot (13) common to the intermediate part and the lever, orienting the intermediate part in rotation in the same said direction when the lever is oriented on the other side of the stop position, the lever being movable around a first axis (2), the intermediate part being movable around a second axis (4) and the first axis being displaced by guiding means on a circular trajectory centred on the second axis for orientations of the lever on the other side of the stop position.

6. Tap according to claim 2, wherein the first means comprise a groove (35) in the intermediate part (36) to receive a pin (34) integral with the lever (32), the lever being movable in rotation around a first axis (33) and the intermediate part around a second axis, the displacement of the pin in the groove inducing the rotation of the intermediate part in one direction, when the lever is oriented on one side of the stop position and wherein the second means comprise an extension of the groove in the intermediate part, the displacement of the pin inducing the rotation of the intermediate part in the same said direction, when the lever is oriented on the other side of the stop position.

7. Tap according to claim 2, wherein the first and the second means comprise a connecting rod (40) linking the lever (38) and the intermediate part (41), the connecting rod being movable along a primary axis (43) of rotation around the lever and along a secondary axis (44) around the intermediate part, the lever being movable in rotation around a first axis (39) and the intermediate part around a second axis (45), the axes being parallel to each other, the stop position being defined by the orthogonality of the plane of the primary and secondary axes and the plane of the secondary and second axes, the rotation of the intermediate part taking place, by means of the connecting rod, in a same direction for an orientation of the lever on one side and on the other side of the stop position.

8. Tap according to claims 1 and 2, wherein the first means comprise a first axis (47) for the rotation of the intermediate part (46), comprise a circular groove (49), formed in the lever (48) and centred on said first axis, comprise a pin (50) integral with said cylinder, arranged in the groove, said pin bearing on a first end of the groove at the stop position of the lever and beyond, and the pin being displaced in the groove for positions of the lever on one side of this stop position, to assure an orientation of the lever in rotation around the first axis on one side of the stop position and around the pin on the other side, and comprise a first blocking lug (52), formed in the lever, immobilising the intermediate part in relation to the lever for its positions on one side of the stop position, when the lever is moved away from this stop position, to induce the rotation of the intermediate part in one direction, wherein the second means comprise a second lug (54), formed on the lever, arranged between the first axis and the pin, the rotation of the lever around the pin in the opposite direction for orientations of the lever on the other side of the stop position, controlling the rotation of the intermediate part in the same said direction, by said second lug bearing on this intermediate part, and wherein the return means (53) are arranged between the intermediate part and the lever.

## Patentansprüche

1. Mischbatterie zur Abgabe eines Gemisches aus Flüssigkeiten, umfassend ein Mischsystem mit einer beweglichen, mit einem Mischkanal (14) (22) versehenen Platte (5) (18), die auf einer festen Platte (6) (19) verschieblich ist, welche mit Öffnungen für den Einlass von Flüssigkeiten (7) und den Auslass des Gemisches (8) aus diesen Flüssigkeiten nach Durchlaufen des Mischkanals versehen ist, wobei die Batterie einen Hebel (1) (26) (32) (38) (48) (57) umfasst, der winkelig in einer Ebene zwischen einem Winkelminimum und einem Winkelmaximum gestellt werden kann, um die Gemischabgabe zu variieren, wobei der Hebel geeignet ist, bei konstanter Winkelstellung um eine Richtung der Ebene zu schwenken, wodurch eine Drehachse für einen in einem festen Batteriekörper (11) beweglichen Zylinder (0) gebildet wird, wobei der Zylinder bei dieser Bewegung mit dem Hebel verbunden ist, um die Flüssigkeitsgehalte in dem Gemisch zu variieren, wobei die Batterie erste Mittel zur Abgabe des Gemisches durch Stellung des Hebels diesseits einer Anschlagstellung einerseits und zum Stoppen der Gemischabgabe durch Stellung des Hebels in einer Nähe der Anschlagstellung andererseits umfasst, wobei die Batterie zweite Mittel zur Abgabe des Gemisches durch Stellung des Hebels jenseits der Anschlagsstellung umfasst, wobei die Batterie einen dynamischen Anschlag (64) (61) aufweist, der von einem auf den Hebel drückenden Benutzer wahrgenommen wird, wenn der Hebel über die Anschlagstellung hinaus bewegt wird, **dadurch gekennzeichnet, dass** der dynamische Anschlag Rückführmittel (9) (23) (31) (37) (42) (53) (65) (66) umfasst, um bei Stellungen des Hebels jenseits der Anschlagstellung den Hebel in die Nähe der Anschlagstellung zurückzuführen, wenn der Benutzer keinen Druck ausübt, wobei die Rückführmittel inaktiv sind, wenn der Hebel diesseits der Anschlagstellung positioniert wird und sich von dieser Anschlagstellung entfernt.

2. Batterie nach Anspruch 1, bei der die ersten Mittel geeignet sind, durch Stellung des Hebels diesseits der Anschlagstellung die Drehung eines Zwischenstücks (3) (36) (41), welches den Hebel mit der beweglichen Platte verbindet, in einer Richtung zu ermöglichen, um die Verschiebung der beweglichen Platte auf der festen Platte zu steuern, wobei die Verschiebung die Gemischabgabe steuert, und bei der die zweiten Mittel geeignet sind, durch Stellung des Hebels jenseits der Anschlagstellung die Stellung des Zwischenstücks in gleicher Richtung zu ermöglichen.

3. Batterie nach Anspruch 1, bei der die ersten Mittel in der auf der festen Platte verschieblichen Platte einen ersten, die Gemischabgabe bei den Stellungen des Hebels diesseits der Anschlagstellung ermöglichenden hohlen Kanal (22) und einen massiven Bereich (25) umfassen, um die Gemischabgabe bei Anschlagstellung zu stoppen, und bei der die zweiten Mittel in der auf der festen Platte verschieblichen Platte einen zweiten hohlen Kanal umfassen, der mit dem ersten Kanal verbunden ist und die Gemischabgabe bei den Stellungen jenseits der Anschlagstellung ermöglicht.

4. Batterie nach Anspruch 1, bei der die ersten Mittel in der beweglichen Platte eine Nut (29) zur Aufnahme eines mit dem Hebel fest verbundenen Stiftes (28) umfassen, wobei der Hebel (26) um eine Achse (27) drehbeweglich ist, wobei die Bewegung des Stiftes in der Nut die Verschiebung der Platte in einer Richtung und die Gemischabgabe bei den Stellungen des Hebels diesseits der Anschlagstellung steuert und diese Abgabe bei Anschlagstellung stoppt, und bei der die zweiten Mittel eine Verlängerung der Nut aufweisen, um dieselbe Verschiebungsrichtung der mobilen Platte durch Stellung des Hebels jenseits der Anschlagstellung beizubehalten.

5. Batterie nach Anspruch 2, bei der die ersten Mittel eine Verzahnung (12) aufweisen, die dem Zwischenstück (3) und dem Hebel (1) gemeinsam ist und das drehende Zwischenstück in eine Richtung stellt, wenn der Hebel diesseits der Anschlagstellung gestellt ist, und bei der die zweiten Mittel durch eine Abflachung (13) gebildet sind, die dem Zwischenstück und dem Hebel gemeinsam ist und das drehende Zwischenstück in dieselbe Richtung stellt, wenn der Hebel jenseits der Anschlagstellung gestellt ist, wobei der Hebel um eine erste Achse (2) beweglich ist, wobei das Zwischenstück um eine zweite Achse (4) beweglich ist und wobei die erste Achse sich bei Stellungen des Hebels jenseits der Anschlagstellung mittels Führungsmittel auf einer kreisförmigen, um die zweite Achse zentrierten Umlaufbahn bewegt.

6. Batterie nach Anspruch 2, bei der die ersten Mittel eine Nut (35) zur Aufnahme eines mit dem Hebel (32) fest verbundenen Stiftes (34) in dem Zwischenstück (36) umfassen, wobei der Hebel um eine erste Achse (33) und das Zwischenstück um eine zweite Achse drehbeweglich sind, wobei die Bewegung des Stiftes in der Nut die Drehung des Zwischenstücks in einer Richtung bewirkt, wenn der Hebel diesseits der Anschlagstellung gestellt ist, und bei der die zweiten Mittel eine Verlängerung der Nut in dem Zwischenstück aufweisen, wobei die Bewegung des Stiftes die Drehung des Zwischenstücks in gleicher Richtung bewirkt, wenn der Hebel jenseits der Anschlagstellung gestellt ist.

7. Batterie nach Anspruch 2, bei der die ersten und zweiten Mittel ein Verbindungsglied (40) umfassen, das den Hebel (38) und das Zwischenstück (41) verbindet, wobei das Verbindungsglied in einer primären Drehachse (43) um den Hebel und in einer sekundären Achse (44) um das Zwischenstück beweglich ist, wobei der Hebel um eine erste Achse (39) und das Zwischenstück um eine zweite Achse (45) drehbeweglich sind, wobei die Achsen parallel zueinander verlaufen, wobei die Anschlagstellung durch die Orthogonalität der Ebene der primären und der sekundären Achse und der Ebene der sekundären und der zweiten Achse definiert ist, wobei die Drehung des Zwischenstücks über das Verbindungsglied bei einer Stellung des Hebels diesseits und jenseits der Anschlagstellung in gleicher Richtung erfolgt.

8. Batterie nach Anspruch 1 und 2, bei der die ersten Mittel eine erste Achse (47) für die Drehung des Zwischenstücks (46) umfassen, eine kreisförmige, in dem Hebel (48) ausgebildete und um diese erste Achse zentrierte Nut (49) umfassen, einen mit dem Zylinder fest verbundenen und in der Nut befindlichen Stift (50) umfassen, wobei der Stift bei und jenseits der Anschlagstellung des Hebels an einem ersten Ende der Nut anliegt und sich bei Stellungen des Hebels diesseits dieser Anschlagstellung in der Nut bewegt, um sicherzustellen, dass sich der Hebel diesseits der Anschlagstellung um die erste Achse und jenseits um den Stift dreht, und eine erste Blockiernase (52) umfassen, die in dem Hebel ausgebildet ist und das Zwischenstück in Bezug auf den Hebel bei dessen Stellungen diesseits der Anschlagstellung blockiert, wenn der Hebel von dieser Anschlagstellung wegbewegt wird, um die Drehung des Zwischenstücks in einer Richtung zu bewirken, bei der die zweiten Mittel eine zweite Nase (54) umfassen, die auf dem Hebel ausgebildet und zwischen der ersten Achse und dem Stift angeordnet ist, wobei die Drehung des Hebels um den Stift in der entgegengesetzten Richtung bei Stellungen des Hebels jenseits der Anschlagstellung dadurch die Drehung des Zwischenstücks in gleicher Richtung steuert, dass die zweite Nase gegen dieses Zwischenstück drückt und bei der die Rückführmittel (53) zwischen dem Zwischenstück und dem Hebel angeordnet sind.
